# EUROPÄISCHE PATENTSCHRIFT

(11) **EP 2 882 144 B1**
(45) Veröffentlichungstag und Bekanntmachung des Hinweises auf die Patenterteilung: **01.03.2017**
(21) Anmeldenummer: 14196470.0
(22) Anmeldetag: 05.03.2009
(51) Int. Cl.: H04L 12/40, H04L 29/06, H04L 12/46

(54) **Verfahren und Filteranordnung zum Filtern von über einen seriellen Datenbus eines Kommunikationsnetzwerks in einem Teilnehmer des Netzwerks eingehenden Nachrichten**
Method and filter assembly for filtering incoming messages transmitted over a serial bus of a communication network in a participant of the network
Procédé et agencement de filtre destinés à filtrer des informations entrantes à l'aide d'un bus de données en série d'un réseau de communication dans un abonné du réseau

(30) Priorität: 10.03.2008 DE 102008000583
(43) Veröffentlichungstag der Anmeldung: 10.06.2015
(62) Teilanmeldung aus: 09719700.8
(73) Patentinhaber: ROBERT BOSCH GMBH, 70442 Stuttgart (DE)
(72) Erfinder: Hartwich, Florian, 72762 Reutlingen (DE); Bailer, Franz, 72116 Moessingen (DE); Ihle, Markus, 71282 Hemmingen (DE); Horst, Christian, 72144 Dusslingen (DE)

(56) Entgegenhaltungen:
- EP-A1- 1 659 752
- WO-A2-03/025940
- DE-A1- 10 143 356
- US-A1- 2006 224 838

## Beschreibung

Die vorliegende Erfindung betrifft ein Verfahren zum Filtern von über einen seriellen Datenbus eines Kommunikationsnetzwerks in einem Kommunikations-Modul eines an den Datenbus angeschlossenen Teilnehmers eingehenden Nachrichten mittels einer Filteranordnung. Dabei weisen die Nachrichten jeweils eine Kennung zur Identifikation auf. Die Eigenschaften der Filteranordnung werden durch in mindestens einer Liste der Filteranordnung abgelegte Kennungen von Nachrichten definiert.

Die Erfindung betrifft außerdem eine Filteranordnung für ein Kommunikations-Modul eines an einen seriellen Datenbus eines Kommunikationsnetzwerks angeschlossenen Teilnehmers, zur Ausführung des genannten Verfahrens.

### Stand der Technik

Aus dem Stand der Technik sind Kommunikationsnetzwerke bekannt, in denen Nachrichten gemäß seriellen Kommunikationsprotokollen (z.B. Controller Area Network (CAN), FlexRay, Local Interconnect Network (LIN), Media Oriented Systems Transport (MOST)) übertragen werden. Die Netzwerke umfassen mindestens einen Datenbus, an den mehrere Teilnehmerknoten angeschlossen sind. Es ist ferner bekannt, in diesen Kommunikationsnetzwerken nicht alle über den Datenbus gesendeten Nachrichten von allen an den Datenbus angeschlossenen Teilnehmerknoten zu verwenden. Die Teilnehmerknoten umfassen jeweils ein Kommunikations-Modul und eine Applikation. Um die Host-Applikation in den Teilnehmerknoten zu entlasten, werden von vielen Kommunikations-Modulen nur die Nachrichten an die Applikation weitergegeben, die auch in der Applikation verwendet werden. Die Nachrichten werden dabei anhand ihrer numerischen Kennung (sog. Identifier) erkannt. Dieses Verfahren wird als Akzeptanz-Filterung bezeichnet. Die bekannten Verfahren zur Akzeptanz-Filterung umfassen Listen mit Identifiern, die durchgelassen werden sollen (sog. Akzeptanz-Codes). Teile der Identifier können für die Filterung ausgeblendet werden, so dass jeder Listen-Eintrag für eine Gruppe von Identifiern stehen kann (sog. Akzeptanz-Maske). Dabei können jeweils n Bit des Identifiers mittels einer Maske ausgeblendet werden, so dass der Identifier für eine Gruppe von 2n Identifiern steht. Das bekannte Verfahren kann durch Listen von Identifiern variiert werden, die nicht akzeptiert, also gesperrt werden sollen. Diese Listen sind per Software konfigurierbar.

Wenn eine Applikation Nachrichten aus einem breiten Spektrum von Identifiern verwendet, kann es vorkommen, dass die Filter-Möglichkeiten des Hardware Kommunikations-Moduls nicht ausreichen, alle notwendigen Nachrichten durchzulassen und gleichzeitig alle überflüssigen Nachrichten zu sperren. Dann muss die Applikations-Software für die restliche Akzeptanz-Filterung Rechenleistung der Recheneinheit (z.B. Central Processing Unit; CPU) des Teilnehmerknotens aufwenden. Zudem sind andere Größen der durch die Akzeptanz-Masken definierten Gruppen nur durch Überlagerung möglich, indem mehrere Listen-Einträge gleichzeitig betrachtet und kombiniert werden. Das erfordert jedoch Zeit und Hardware-Ressourcen. Ein weiterer Nachteil der Filterung mittels Akzeptanz-Codes und Akzeptanz-Masken ist die Gefahr, dass erwünschte Nachrichten versehentlich zurückgewiesen werden. Um dies zu verhindern wird die Akzeptanz-Maske üblicherweise sehr weit geöffnet, was zur Folge hat, dass auch solche Nachrichten akzeptiert werden, die von der Applikation eigentlich gar nicht verwendet werden. Eine zusätzliche Belastung der Applikations-Software (häufiges Bedienen des FIFOs zum Abholen der Nachricht, Filtern der Nachricht, etc.) ist die Folge.

Die deutsche Offenlegungsschrift DE 101 43 356 A1 offenbart ein Akzeptanz-Filter zur Filterung von Identifizierern in Nachrichten, bei welchem durch Definition von Identifizierer-Bereichen Speicherplatz gespart wird und der Suchvorgang verkürzt wird.

Die europäische Patentanmeldung EP 1 659 752 A1 offenbart ein Filter mit einer vom Filterergebnis abhängigen Anweisung, ob ein Datenpaket weitergeleitet werden soll, oder nicht.

US 2006/0224838 A1 offenbart ein Filter für Datenverarbeitung in Multiprozessor-Systemen mit verschiedenen Filterelementen zum Weiterleiten oder Zurückweisen von Datenpaketen, wobei Filterelemente einzeln aktiviert und deaktiviert werden können.

Ausgehend von dem beschriebenen Stand der Technik, liegt der vorliegenden Erfindung die Aufgabe zu Grunde, eine Akzeptanz-Filterung mit einer großen Zahl an Filterkriterien mit möglichst wenig Aufwand zu realisieren.

### Offenbarung der Erfindung

Zur Lösung dieser Aufgabe wird ausgehend von dem Filterverfahren der eingangs genannten Art vorgeschlagen, dass in der mindestens einen Liste der Filteranordnung mehrere Kennungspaare abgelegt sind, durch die jeweils ein durch eine erste Kennung und eine zweite Kennung begrenzter Bereich definiert wird, dass die Kennung einer eingehenden Nachricht zumindest mit ausgewählten Kennungspaaren verglichen wird und abgefragt wird, ob die Kennung der eingehenden Nachricht größer oder größer gleich als die ausgewählte erste Kennung und kleiner oder kleiner gleich als die ausgewählte zweite Kennung ist, und dass die eingehende Nachricht an die Applikation weitergeleitet oder zurückgewiesen wird, falls die Kennung der eingehenden Nachricht in dem durch die erste Kennung und die zweite Kennung begrenzten Bereich liegt.

Das erfindungsgemäße Filterverfahren verwendet also nicht eine Liste mit einzelnen Kennungen (Identifiern) mit optionalen Akzeptanz-Masken, sondern eine Liste von Identifier-Paaren. Das vorgeschlagene Verfahren definiert ein Identifier-Paar als einen Bandpass (sog. Acceptance-Filter) oder als eine Bandsperre (sog. Rejection-Filter). Alle Identifier von empfangenen Nachrichten, deren Zahlenwerte numerisch zwischen den beiden Zahlenwerten (der ersten und zweiten Kennung) des Kennungspaares liegen, werden akzeptiert (Bandpass) oder zurückgewiesen bzw. verworfen (Bandsperre). Es können sequentiell mehrere Identifier-Paare betrachtet werden, so lange bis ein passendes Paar gefunden oder bis das Ende der Liste erreicht ist.

Der Vorteil des erfindungsgemäßen Bereichsfilters (sog. Range-Filters) liegt darin, dass die Identifier-Paare unabhängig voneinander betrachtet werden können und dass die Breite der Filterbereiche beliebig definiert werden kann. Die Filteranordnung ist vorzugsweise in Hardware implementiert. Die Identifier-Paare werden vorzugsweise beginnend bei einem bestimmten Identifier-Paar, insbesondere beginnend am Anfang der Liste, sequentiell betrachtet. Das hat den Vorteil, dass die Steuerung des Filterverfahrens und der Zugriff auf die Listeninhalte einfach und ressourcensparend ausgebildet ist und dass die Identifier-Paare in einem Speicher mit wahlfreiem Zugriff (z.B. Random Access Memory; RAM), aber auch in einem Festwertspeicher (Read Only Memory; ROM und Abwandlungen davon (PROM, EPROM, EEPROM)) abgelegt werden können und nicht in (Flip-Flop-) Registern implementiert werden müssen.

Vorteilhafte Ausgestaltungen der Erfindung können den Unteransprüchen entnommen werden und werden nachfolgend anhand der Figuren näher erläutert. Es zeigen:
- Figur 1: ein Beispiel für ein Kommunikationsnetzwerk mit Teilnehmerknoten, die über eine erfindungsgemäße Filteranordnung verfügen;
- Figur 2: ein Beispiel für ein Ablaufdiagramm eines erfindungsgemäßen Filterverfahrens;
- Figur 3: ein Beispiel für ein Filterelement einer Liste der erfindungsgemäßen Filteranordnung für 11-Bit-Kennungen von CAN-Nachrichten; und
- Figur 4: ein Beispiel für ein Filterelement einer Liste der erfindungsgemäßen Filteranordnung für 29-Bit-Kennungen von CAN-Nachrichten.

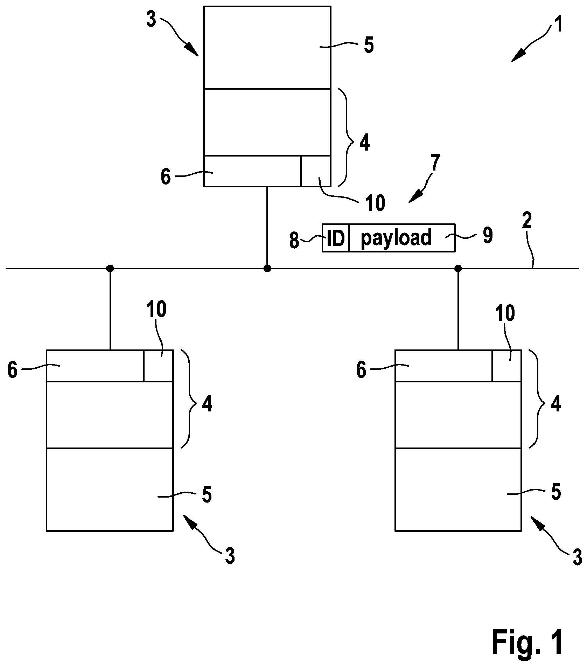

In Figur 1 ist ein erfindungsgemäßes Kommunikationsnetzwerk in seiner Gesamtheit mit dem Bezugszeichen 1 bezeichnet. Das Netzwerk 1 umfasst einen Datenbus 2, der symbolisch durch eine einzige Linie dargestellt ist. An den Datenbus 2 sind mehrere Teilnehmerknoten 3 angeschlossen, von denen in Figur 1 beispielhaft lediglich drei dargestellt sind. Jeder Knoten 3 ist über ein Kommunikations-Modul 4 an den Datenbus 2 angeschlossen. Die Knoten 3 verfügen außerdem über eine Host-Applikation 5.

Über den Datenbus 2 können Nachrichten 7 nach einem seriellen Kommunikationsprotokoll (z.B. CAN, FlexRay, LIN, MOST u. a.) übertragen werden. Das Kommunikations-Modul 4 ist für den Empfang und das Versenden von Nachrichten 7 über den Datenbus 2 zuständig. Da nicht alle über den Bus 2 gesendeten Nachrichten 7 von allen an den Bus 2 angeschlossenen Knoten 3 verwendet werden, verfügen die Kommunikations-Module 4 über eine Filteranordnung 6. Die Filteranordnung 6 lässt nur diejenigen Nachrichten 7 zu der Applikation 5 durch, die für den jeweiligen Knoten 3 bestimmt sind und in der Applikation 5 des Knotens 3 auch wirklich verwendet werden.

Die Nachrichten 7 verfügen jeweils über eine Kennung 8 (sog. Identifier), welche eine eindeutige Identifikation der Nachrichten 7 ermöglicht. Bei CAN ist die Kennung 8 bspw. eine Art Absender-Adresse, welche die Ermittlung des Ursprungs der Nachricht 7 erlaubt und den Inhalt der Nachricht 7 kennzeichnet. Neben der Kennung 8 verfügen die Nachrichten 7 auch über einen Nutzdatenteil 9 (sog. Payload). Das von der Filteranordnung 6 ausgeführte Filterverfahren wird auch als Akzeptanz-Filterung bezeichnet.

Die vorliegende Erfindung betrifft eine Weiterbildung der Filteranordnung 6, so dass eine besonders große Anzahl an Filterkriterien mit relativ wenig Aufwand implementiert werden kann. Die Akzeptanz-Filterung beginnt zu arbeiten, wenn eine neue Nachricht 7 empfangen worden ist. Der Identifier 8 der empfangenen Nachricht 7 (ein Zahlenwert) wird mit einer Liste von konfigurierten Identifier-Paaren verglichen, um zu entscheiden, ob die empfangene Nachricht 7 an die Applikations-Software 5 weitergeleitet wird, oder ob die Nachricht 7 verworfen wird.

Die Implementierung erfolgt vorzugsweise in Hardware. Ein wesentlicher Aspekt der Erfindung betrifft mindestens eine Liste, die in einem Speicherelement 10 der Filteranordnung 6 abgespeichert ist. Das Speicherelement 10 ist vorzugsweise als ein Speicher mit wahlfreiem Zugriff (z.B. RAM) oder als ein Festwertspeicher (z.B. Flash-Speicher, ROM, EEPROM) ausgebildet. Die mindestens eine Liste umfasst bspw. 128 Einträge mit jeweils 32 Bit Breite. Selbstverständlich kann die Liste auch eine größere oder kleinere Zahl an Einträgen (z.B. 256 oder 64) oder Einträge mit einer größeren oder kleineren Breite (z.B. 64 oder 16 Bit) aufweisen. Eine Wortbreite von 64 Bit hätte den Vorteil, dass z.B. für Extended 29-Bit-CAN-Identifier ein Identifier-Paar samt Konfigurationsbits in einem Datenwort untergebracht werden könnte, so dass beide Identifier des Identifier-Paars mit einem einzigen Lesevorgang eingelesen werden könnten. In der Liste sind mehrere Identifier-Paare abgelegt, durch die jeweils ein durch eine erste Kennung ID1 und eine zweite Kennung ID2 begrenzter Bereich definiert wird. Die Kennung 8 einer eingehenden Nachricht 7 wird beginnend bei einem bestimmten Identifier-Paar aus der Liste, vorzugsweise dem ersten Listeneintrag, so lange nacheinander mit Identifier-Paaren aus der Liste verglichen, bis ein durch ein Identifier-Paar definierter Bereich gefunden wurde, in dem die Kennung 8 der Nachricht 7 liegt. In diesem Fall wird die eingehende Nachricht 7 dann -je nach Konfiguration - entweder an die Applikation 5 weitergeleitet oder zurückgewiesen. Die Identifier-Paare aus der Liste werden vorzugsweise sequentiell mit der Kennung 8 der eingehenden Nachricht 7 verglichen. Falls kein durch ein Identifier-Paar definierter Bereich in der Liste gefunden werden kann, in dem die Kennung 8 der Nachricht 7 liegt, kann die eingehende Nachricht 7 -je nach Konfiguration - entweder an die Applikation 5 weitergeleitet oder zurückgewiesen werden.

Der Vorteil des Verfahrens liegt darin, dass die Identifier-Paare unabhängig voneinander sequentiell betrachtet werden können und dass die Breite ihrer Filter-Bereiche beliebig konfiguriert werden kann. Da die Identifier-Paare sequentiell betrachtet werden, können sie in einem Speicher mit wahlfreiem Zugriff oder in einem Festwertspeicher abgelegt werden und müssen nicht in Flip-Flop-Registern implementiert werden. Das erlaubt eine einfache und kostengünstige Realisierung der Erfindung.

Bei der vorliegenden Erfindung liegen die Vergleichs-Identifier als eine Liste von Identifier-Paaren vor, die in einem Speicherelement 10 abgelegt sind. Der Speicher 10 ist typischerweise als RAM implementiert, für spezielle Anwendungen sind auch nicht-flüchtige Speicher (NVRAM, Flash-Speicher, FeRAM, MRAM, PCRAM) möglich. Die Anzahl von Identifier-Paaren ist frei einstellbar. Für jedes Identifier-Paar ist festgelegt, ob es als Bandpass (sog. Acceptance-Filter) oder als Bandsperre (sog. Rejection-Filter) wirkt. Die beiden Zahlenwerte eines Identifier-Paares dürfen identisch sein, das Identifier-Paar wirkt dann nur auf eine bestimmte Nachricht. Die Akzeptanz-Filter 6 bzw. der Inhalt der mindestens einen Filterliste und die empfangenen Nachrichten können in dem gleichen Speicher abgelegt werden, die Aufteilung des Speicherplatzes zwischen Filtern und Nachrichten kann konfiguriert werden.

Der Speicherbereich, der für ein Identifier-Paar benötigt wird, hängt von dem Kommunikations-Protokoll ab. Für 11-Bit-CAN-Identifier kann ein Identifier-Paar in einem z.B. 32-Bit Datenwort untergebracht werden. Für 29-Bit-CAN-Identifier kann ein Identifier-Paar in z.B. zwei 32-Bit Datenworten untergebracht werden, jeweils mit Konfigurations-Bits, die bspw. festlegen, ob das Paar als Bandpass oder als Bandsperre wirkt. Um in manchen Anwendungen Speicherplatz zu sparen, können optional in der Liste Identifier-Paare, deren beiden Zahlenwerte identisch sind, durch Einzel-Identifier ersetzt werden. In CAN-Anwendungen können getrennte Listen für Data-Frames und für Remote-Frames sowie für 11-Bit-Identifier und für 29-Bit-Identifier vorgesehen sein. Das vorgeschlagene Akzeptanz-Filter-Verfahren kann auch mit Masken kombiniert werden, die Teile der Identifier für die Filterung ausblenden. Außerdem ist es denkbar, das vorgeschlagene Bereichs-Filter (Range-Filter)-Verfahren mit anderen bekannten Filterverfahren zu kombinieren. Denkbar wäre bspw. eine Kombination mit einem sog. Classic Filter, bei dem die Kennung 8 der eingehenden Nachricht 7 mit mindesten einer Akzeptanz-Kennungen (sog. Acceptance Code) und/oder mit mindestens einer Akzeptanz-Masken (sog. Acceptance Mask) verglichen wird. Vorzugsweise wird eine in der Liste enthaltene erste Kennung als Akzeptanz-Kennung und eine in der Liste enthaltene entsprechende zweite Kennung als Akzeptanz-Maske herangezogen. Auch eine Kombination des vorgeschlagenen Range-Filter-Verfahrens mit einem sog. Dual ID Filter wäre denkbar. Dabei werden beide in der Liste abgespeicherten Kennungen mit der Kennung 8 der empfangenen Nachricht 7 verglichen.

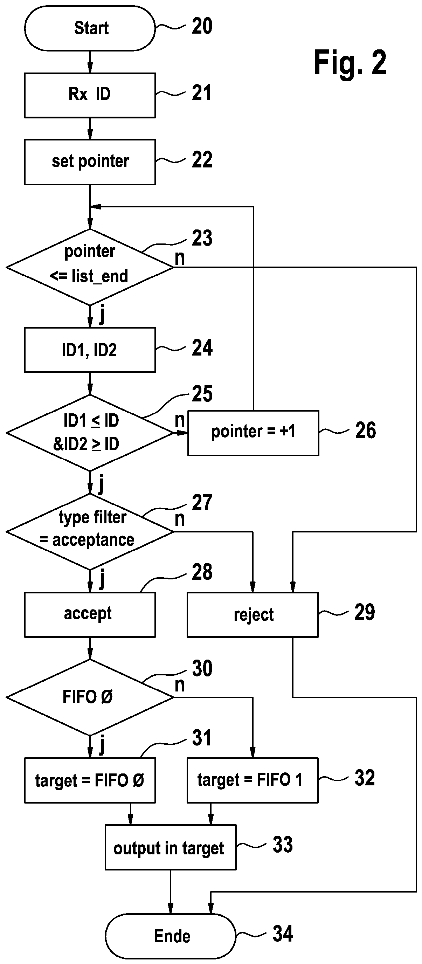

Nachfolgend wird das erfindungsgemäße Verfahren anhand des Ablaufdiagramms aus Figur 2 näher erläutert. Das Verfahren beginnt in einem Funktionsblock 20. Die Akzeptanz-Filterung beginnt zu arbeiten, wenn eine neue Nachricht 7 empfangen worden ist. Anschließend wird in einem Funktionsblock 21 die Kennung (ID) 8 einer eingehenden Nachricht 7 eingelesen. In einem Funktionsblock 22 wird ein Zeiger (sog. Pointer) auf eine bestimmte Stelle in der Liste gesetzt, vorzugsweise auf das erste Identifier-Paar am Anfang der Liste. Das Filter-Schaltwerk bekommt als Eingangs-Parameter den Identifier 8 der empfangenen Nachricht 7, den Zeiger auf die Liste von Identifier-Paaren und die Anzahl der Listeneinträge (Größe der Liste). In einem Abfrageblock 23 wird überprüft, ob sich der Zeiger noch innerhalb der Liste befindet.

Falls ja, liest das Schaltwerk in einem Funktionsblock 24 ein erstes Identifier-Paar von der Liste und prüft in einem Abfrageblock 25, ob der Zahlenwert des empfangenen Identifiers 8 in dem von dem Identifier-Paar definierten Bereich liegt. Falls nein, wird in einem Funktionsblock 26 der Zeiger um "1" erhöht und zu dem Abfrageblock 23 verzweigt. Beim nachfolgenden Durchlauf wird das nächste Identifier-Paar aus der Liste ausgelesen und mit dem Identifier 8 der anliegenden Nachricht 7 verglichen. Diese Schleife wird so lange durchlaufen, bis das Ende der Liste erreicht ist ("nein" am Abfrageblock 23) oder bis ein "match" vorliegt, das heißt bis der Zahlenwert des empfangenen Identifiers 8 in dem von dem Identifier-Paar definierten Bereich liegt ("ja" am Abfrageblock 25).

Falls ein "match" vorliegt, wird in einen Abfrageblock 27 verzweigt, wo ermittelt wird, ob das aktuelle Identifier-Paar als Bandpass (Acceptance) wirken soll. Falls ja, wird in einem Funktionsblock 28 festgelegt, dass die eingehende Nachricht 7 akzeptiert werden soll. Falls nein, wird in einem Funktionsblock 29 festgelegt, dass die eingehende Nachricht 7 zurückgewiesen werden soll. Informationen darüber, ob das Identifier-Paar als ein Bandpass oder als eine Bandsperre wirken soll, können ebenfalls in der Liste in Form eines Konfigurationsbits SFM (Standard Filter Mode) abgespeichert sein.

Auch in dem Fall, dass das Ende der Liste erreicht ist, ohne dass ein "match" vorliegt, das heißt keine passenden Identifier-Paare in der Liste gefunden wurden, wird in dem dargestellten Ausführungsbeispiel in den Funktionsblock 29 verzweigt. Was in diesem Fall passiert, kann vorab konfiguriert werden. Es könnte auch konfiguriert werden, dass in dem Fall, dass keine passenden Identifier-Paare in der Liste gefunden wurden, die anliegende Nachricht 7 akzeptiert wird. In diesem Fall müsste dann von dem Abzweig "nein" des Abfrageblocks 23 zu dem Funktionsblock 28 verzweigt werden.

Vom Funktionsblock 28 aus wird in einen weiteren Abfrageblock 30 verzweigt, wo überprüft wird, ob die eingehende Nachricht 7 in einem ersten Zwischenspeicher FIFO0 abgelegt werden soll, von wo aus die Applikation 5 sich die Nachricht 7 dann abholen kann. So ist es bspw. denkbar, die Nachricht 7 in einem unterschiedlichen Zwischenspeicher abzulegen, in Abhängigkeit davon, ob die Nachricht 7 wichtig oder unwichtig, zeitkritisch oder weniger zeitkritisch, oder im Falle eines Gateways für Kanal A oder für Kanal B bestimmt ist. Informationen darüber, in welchen Zwischenspeicher die Nachricht 7 abzulegen ist, können ebenfalls in der Liste in Form eines Konfigurationsbits SFFS (Standard Filter FIFO Select) abgespeichert sein. In einem Funktionsblock 31 wird dann festgelegt, dass die Nachricht 7 in dem ersten Zwischenspeicher FIFO0 abgespeichert wird. Falls die Nachricht 7 nicht im Zwischenspeicher FIFO0 abgelegt werden soll, wird in einen Funktionsblock 32 verzweigt, wo festgelegt wird, dass die Nachricht 7 in dem zweiten Zwischenspeicher FIFO1 abgespeichert wird, von wo aus die Applikation 5 sich die Nachricht 7 dann abholen kann. Die vorliegende Erfindung ist jedoch nicht auf lediglich zwei Zwischenspeicher FIFO0 und FIFO1 beschränkt. Bei einem Einsatz der Erfindung in einem Gateway mit mehreren Kanälen kann es bspw. sinnvoll sein, mehr als zwei Zwischenspeicher FIFOO, FIFO1 zu haben. Eine größere Zahl von FIFOs mit einer Tiefe von 1 wäre dann ein sog. Full-CAN.

In einem Funktionsblock 33 wird dann die eingehenden Nachricht 7 in dem ausgewählten Zwischenspeicher FIFO0 oder FIFO1 abgelegt. Dann wird das Verfahren in einem Funktionsblock 34 beendet. Das Verfahren wird auch dann beendet, wenn die anstehende Nachricht zurückgewiesen werden soll (Funktionsblock 29).

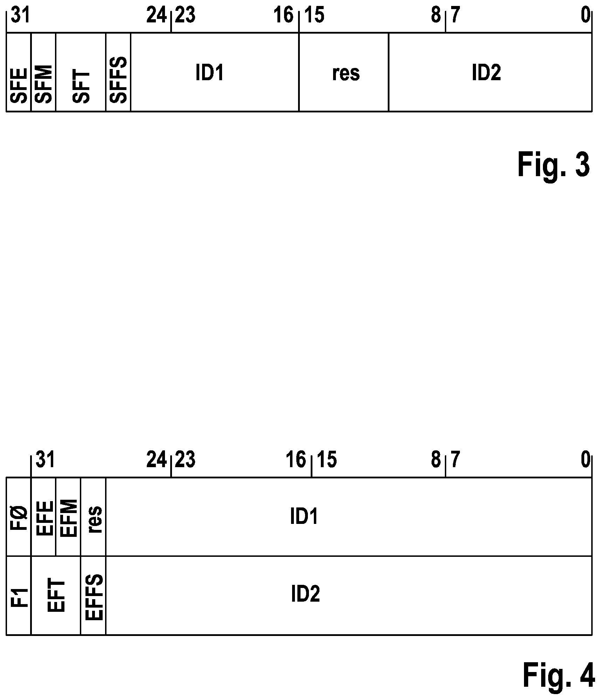

Anhand der Figur 3 wird beispielhaft ein möglicher Aufbau eines 32-Bit Datenworts des Speicherelements 10 für einen Standard 11-Bit-CAN-Identifier gezeigt. Das Bit 31 umfasst ein Konfigurationsbit SFE (Standard Filter Enable). Alle aktiven Filterelemente werden für die Akzeptanz-Filterung von Standard Datenrahmen benutzt. Der Wert "0" des Bits 31 besagt, dass der Filter inaktiv ist, und der Wert "1" besagt, dass der Filter aktiv ist. Bit 30 umfasst ein Konfigurationsbit SFM (Standard Filter Mode). Der Wert "0" des Bits 30 besagt, dass die anliegende Nachricht 7 akzeptiert wird, falls die Filterung einen "match" ergibt, und der Wert "1" besagt, dass die anliegende Nachricht verworfen wird, falls die Filterung einen "match" ergibt.

Die Bits 29 und 28 umfassen Konfigurationsbits SFT (Standard Filter Type). Der Wert "00" der Bits 29 und 28 besagt, dass das Filterelement einen Range-Filter im Bereich von der ersten Kennung ID1 bis zu der zweiten Kennung ID2 umfasst. Der Wert "01" besagt, dass das Filterelement einen Dual ID Filter für die erste Kennung ID1 und die zweite Kennung ID2 umfasst. Der Wert "10" besagt, dass das Filterelement einen Classic Filter umfasst, wobei die erste Kennung ID1 einen Akzeptanz-Code und die zweite Kennung ID2 eine Akzeptanz-Maske darstellt. Der Wert "11" ist reserviert, bspw. für zukünftige Erweiterungen des Verfahrens.

Das Bit 27 umfasst ein Konfigurationsbit SFFS (Standard Filter FIFO Select). Der Wert "0" des Bits 27 besagt, dass eine akzeptierte Nachricht 7 in einem ersten Zwischenspeicher FIFO0 abgespeichert wird, und der Wert "1" besagt, dass eine akzeptierte Nachricht 7 in einem zweiten Zwischenspeicher FIFO1 abgespeichert wird. Die elf Bits 26 bis 16 umfassen die Standard Filter Kennung ID1, und die elf Bits 10 bis 0 umfassen die Standard Filter Kennung ID2. Die Bits 11 bis 15 sind reserviert.

Anhand der Figur 4 wird beispielhaft ein möglicher Aufbau von zwei 32-Bit Datenworten des Speicherelements 10 für einen Extended 29-Bit-CAN-Identifier gezeigt. Das Bit 31 des ersten Datenworts F0 umfasst ein Konfigurationsbit EFE (Extended Filter Enable). Alle aktiven Filterelemente werden für die Akzeptanz-Filterung von Extended Datenrahmen benutzt. Der Wert "0" des Bits 31 besagt, dass der Filter inaktiv ist, und der Wert "1" besagt, dass der Filter aktiv ist. Bit 30 des ersten Datenworts umfasst ein Konfigurationsbit EFM (Extended Filter Mode). Der Wert "0" des Bits 30 besagt, dass die anliegende Nachricht 7 akzeptiert wird, falls die Filterung einen "match" ergibt, und der Wert "1" besagt, dass die anliegende Nachricht verworfen wird, falls die Filterung einen "match" ergibt. Das Bit 29 des ersten Datenworts ist reserviert.

Die Bits 31 und 30 des zweiten Datenworts F1 umfassen Konfigurationsbits EFT (Extended Filter Type). Der Wert "00" der Bits 31 und 30 besagt, dass das Filterelement einen Range-Filter im Bereich von der ersten Kennung ID1 bis zu der zweiten Kennung ID2 umfasst. Der Wert "01" besagt, dass das Filterelement einen Dual ID Filter für die erste Kennung ID1 und die zweite Kennung ID2 umfasst. Der Wert "10" besagt, dass das Filterelement einen Classic Filter umfasst, wobei die erste Kennung ID1 einen Akzeptanz-Code und die zweite Kennung ID2 eine Akzeptanz-Maske darstellt. Der Wert "11" ist reserviert, bspw. für zukünftige Erweiterungen des Verfahrens. Das Bit 29 des zweiten Datenworts umfasst ein Konfigurationsbit EFFS (Extended Filter FIFO Select). Der Wert "0" des Bits 29 besagt, dass eine akzeptierte Nachricht 7 in einem ersten Zwischenspeicher FIFO0 abgespeichert wird, und der Wert "1" besagt, dass eine akzeptierte Nachricht 7 in einem zweiten Zwischenspeicher FIFO1 abgespeichert wird.

Die 29 Bits 28 bis 0 des ersten Datenworts umfassen die Extended Filter Kennung ID1, und die 29 Bits 28 bis 0 des zweiten Datenworts umfassen die Extended Filter Kennung ID2.

Das erfindungsgemäße Verfahren eignet sich insbesondere für einen Einsatz in einem Gateway. Dabei kommt vorzugsweise ein sogenannter Basic-CAN-Controller mit einem oder mehreren FIFOs zum Einsatz. Das Gateway ist an verschiedene Datenbusse 2 von verschiedenen Netzwerken 1 angeschlossen. Es dient zum Übertragen von Nachrichten von einem ersten Datenbus 2 eines ersten Netzwerks 1 an einen zweiten Datenbus 2 eines zweiten Netzwerks 1. Durch die erfindungsgemäße Filterung von Nachrichten kann die Gateway-Software entscheidend entlastet werden. Im Zusammenhang mit einem Gateway kommt auch ein entscheidender Vorteil der Erfindung besonders zum Tragen. Ein Gateway muss - anders als viele normale Teilnehmerknoten 3 - eine große Anzahl an in einem Netzwerk 1 übertragenen Nachrichten 7 verarbeiten, das heißt weiterleiten können. Aus diesem Grund fallen bei einem Gateway besonders viele Filterkriterien an, die mit der vorliegenden Erfindung mit geringem Aufwand in Hardware implementiert werden können. Zudem erlaubt die vorliegende Erfindung eine besonders schnelle, effiziente und ressourcenschonende Durchführung der Filterung der eingehenden Nachrichten. Das erfindungsgemäße Verfahren lässt sich auch für so genannte Full-CAN-Controller anwenden, indem zusätzliche Konfigurations-Bits der Filterelemente nicht nur zwischen zwei FIFOs unterscheiden, sondern auch bestimmte Nachrichten in für diese Nachrichten reservierte Speicher (so genannte "dedicated Message Buffer") einsortieren.

## Patentansprüche

1. Verfahren zum Filtern von über einen seriellen Datenbus (2) eines Kommunikationsnetzwerks (1) in einem Kommunikations-Modul (4) eines an den Datenbus (2) angeschlossenen Teilnehmers (3) eingehenden Nachrichten (7) mittels einer Filteranordnung (6),
wobei die Nachrichten (7) jeweils eine Kennung (8) zur Identifikation aufweisen und die Eigenschaften der Filteranordnung (6) durch in mindestens einer Liste der Filteranordnung (6) abgelegte Kennungen von Nachrichten (7) definiert werden, wobei in der mindestens einen Liste der Filteranordnung (6) mehrere Kennungspaare (ID1, ID2) abgelegt sind, durch die jeweils ein durch eine erste Kennung (ID1) und eine zweite Kennung (ID2) begrenzter Bereich definiert wird,
wobei die Kennung (8) einer eingehenden Nachricht (7) zumindest mit ausgewählten Kennungspaaren (ID1, ID2) verglichen wird und abgefragt wird, ob die Kennung (8) der eingehenden Nachricht (7) größer oder größer gleich als die ausgewählte erste Kennung (ID1) und kleiner oder kleiner gleich als die ausgewählte zweite Kennung (ID2) ist,
**dadurch gekennzeichnet, dass** in der Liste der Filteranordnung (6) zusätzlich zu jedem Kennungspaar (ID1, ID2) eine zugehörige Filtermodus-Information (SFM; EFM) abgelegt ist,
wobei eine eingehende Nachricht (7) in Abhängigkeit von der Filtermodus-Information (SFM; EFM) des Kennungspaares (ID1, ID2) der aktuellen Abfrage an eine auf dem Teilnehmer (3) ablaufende Applikation (5) weitergeleitet oder zurückgewiesen wird, falls die Kennung (8) der eingehenden Nachricht (7) in dem durch die erste Kennung (ID1) und die zweite Kennung (ID2) der aktuellen Abfrage begrenzten Bereich liegt,
wobei in der Liste der Filteranordnung (6) zusätzlich zu jedem Kennungspaar (ID1, ID2) eine zugehörige Weiterleitungs-Information (SFFS; EFFS) abgelegt ist, wobei eine eingehende Nachricht (7) in Abhängigkeit von der Weiterleitungs-Information (SFFS; EFFS) des Kennungspaares (ID1, ID2) der aktuellen Abfrage an einen bestimmten Zwischenspeicher (FIFO0; FIFO1) zur Abholung durch die Applikation (5) weitergeleitet wird, falls die Kennung (8) der eingehenden Nachricht (7) in dem durch die erste Kennung (ID1) und die zweite Kennung (ID2) der aktuellen Abfrage begrenzten Bereich liegt.

2. Verfahren nach Anspruch 1, **dadurch gekennzeichnet, dass** die Filteranordnung (6) als weiteres Filterungsverfahren mindestens eine weitere Liste mit Kennungen von Nachrichten aufweist, wobei die Kennung (8) einer eingehenden Nachricht (7) zumindest mit ausgewählten Kennungen aus der weiteren Liste verglichen wird und abgefragt wird, ob die Kennung (8) der eingehenden Nachricht (7) gleich einer ausgewählten Kennung aus der weitere Liste ist, und dass die eingehende Nachricht (7) an die Applikation (5) weitergeleitet oder zurückgewiesen wird, falls die Kennung (8) der eingehenden Nachricht (7) gleich der ausgewählten Kennung aus der weitere Liste ist.

3. Verfahren nach Anspruch 2, **dadurch gekennzeichnet, dass** die ersten Kennungen (ID1) und zweiten Kennungen (ID2) der in der mindestens einen Liste abgelegten Kennungspaare (ID1, ID2) als Kennungen der mindestens einen weiteren Liste herangezogen werden und dass eine eingehende Nachricht (7) an die Applikation (5) weitergeleitet oder zurückgewiesen wird, falls die Kennung (8) der eingehenden Nachricht (7) gleich der ersten Kennung (ID1) oder gleich der zweiten Kennung (ID2) eines ausgewählten Kennungspaares (ID1, ID2) ist.

4. Verfahren nach Anspruch 1, **dadurch gekennzeichnet, dass** die Filteranordnung (6) als weiteres Filterungsverfahren mindestens eine weitere Liste mit Akzeptanz-Kennungen und/oder mit Akzeptanz-Masken aufweist, wobei die Kennung (8) einer eingehenden Nachricht (7) zumindest mit ausgewählten Akzeptanz-Kennungen und/oder mit ausgewählten Akzeptanz-Masken aus der weiteren Liste verglichen wird und abgefragt wird, ob die Kennung (8) der eingehenden Nachricht (7) gleich einer ausgewählten Akzeptanz-Kennung ist oder von der Akzeptanz-Maske umfasst ist, und dass die eingehende Nachricht (7) an die Applikation (5) weitergeleitet oder zurückgewiesen wird, falls die Kennung (8) der eingehenden Nachricht (7) gleich der ausgewählten Akzeptanz-Kennung ist oder von der Akzeptanz-Maske umfasst ist.

5. Verfahren nach Anspruch 4, **dadurch gekennzeichnet, dass** die ersten Kennungen (ID1) und die zweiten Kennungen (ID2) der in der mindestens einen Liste abgelegten Kennungspaare (ID1, ID2) als Akzeptanz-Kennungen und/oder Akzeptanz-Masken der mindestens einen weiteren Liste herangezogen werden und dass eine eingehende Nachricht (7) an die Applikation (5) weitergeleitet oder zurückgewiesen wird, falls die Kennung (8) der eingehenden Nachricht (7) gleich der ersten Kennung (ID1) eines ausgewählten Kennungspaares (ID1, ID2) ist oder von der zweiten Kennung (ID2) des ausgewählten Kennungspaares (ID1, ID2) umfasst ist.

6. Filteranordnung (6) für ein Kommunikations-Modul (4) eines an einen seriellen Datenbus (2) eines Kommunikationsnetzwerks (1) angeschlossenen Teilnehmers (3), zum Filtern von über den Datenbus (2) eingehenden Nachrichten (7),
wobei die Nachrichten (7) jeweils eine Kennung (8) zur Identifikation aufweisen und die Filteranordnung (6) mindestens ein Speicherelement (10) zum Abspeichern einer Liste mit Kennungen von Nachrichten umfasst, durch welche die Eigenschaften der Filteranordnung (6) definiert sind,
wobei in der mindestens einen Liste der Filteranordnung (6) mehrere Kennungspaare (ID1, ID2) abgelegt sind, die jeweils einen durch eine erste Kennung (ID1) und eine zweite Kennung (ID2) begrenzten Bereich definieren,
wobei die Filteranordnung (6) Abfragemittel aufweist, welche die Kennung (8) einer eingehenden Nachricht (7) zumindest mit ausgewählten Kennungspaaren (ID1, ID2) vergleichen um festzustellen, ob die Kennung (8) der eingehenden Nachricht (7) größer oder größer gleich als die ausgewählte erste Kennung (ID1) und kleiner oder kleiner gleich als die ausgewählte zweite Kennung (ID2) ist,
**dadurch gekennzeichnet, dass** in der Liste der Filteranordnung (6) zusätzlich zu jedem Kennungspaar (ID1, ID2) eine zugehörige Filtermodus-Information (SFM; EFM) abgelegt ist,
wobei eine eingehende Nachricht (7) in Abhängigkeit von der Filtermodus-Information (SFM; EFM) des Kennungspaares (ID1, ID2) der aktuellen Abfrage an eine auf dem Teilnehmer (3) ablaufende Applikation (5) weitergeleitet oder zurückgewiesen wird, falls die Kennung (8) der eingehenden Nachricht (7) in dem durch die erste Kennung (ID1) und die zweite Kennung (ID2) der aktuellen Abfrage begrenzten Bereich liegt,
wobei in der Liste der Filteranordnung (6) zusätzlich zu jedem Kennungspaar (ID1, ID2) eine zugehörige Weiterleitungs-Information (SFFS; EFFS) abgelegt ist, wobei eine eingehende Nachricht (7) in Abhängigkeit von der Weiterleitungs-Information (SFFS; EFFS) des Kennungspaares (ID1, ID2) der aktuellen Abfrage an einen bestimmten Zwischenspeicher (FIFO0; FIFO1) zur Abholung durch die Applikation (5) weitergeleitet wird, falls die Kennung (8) der eingehenden Nachricht (7) in dem durch die erste Kennung (ID1) und die zweite Kennung (ID2) der aktuellen Abfrage begrenzten Bereich liegt.

7. Filteranordnung (6) nach Anspruch 6, **dadurch gekennzeichnet, dass** die Filteranordnung (6) mindestens eine weitere Liste mit Kennungen von Nachrichten aufweist, wobei die Kennung (8) einer eingehenden Nachricht (7) zumindest mit ausgewählten Kennungen aus der weiteren Liste verglichen wird und abgefragt wird, ob die Kennung (8) der eingehenden Nachricht (7) gleich einer ausgewählten Kennung aus der weitere Liste ist, und dass die eingehende Nachricht (7) an die Applikation (5) weitergeleitet oder zurückgewiesen wird, falls die Kennung (8) der eingehenden Nachricht (7) gleich der ausgewählten Kennung aus der weitere Liste ist..

8. Filteranordnung (6) nach Anspruch 7, **dadurch gekennzeichnet, dass** die ersten Kennungen (ID1) und zweiten Kennungen (ID2) der in der mindestens einen Liste abgelegten Kennungspaare (ID1, ID2) als Kennungen der mindestens einen weiteren Liste herangezogen werden und dass eine eingehende Nachricht (7) an die Applikation (5) weitergeleitet oder zurückgewiesen wird, falls die Kennung (8) der eingehenden Nachricht (7) gleich der ersten Kennung (ID1) oder gleich der zweiten Kennung (ID2) eines ausgewählten Kennungspaares (ID1, ID2) ist.

9. Filteranordnung (6) nach Anspruch 6, **dadurch gekennzeichnet, dass** die Filteranordnung (6) mindestens eine weitere Liste mit Akzeptanz-Kennungen und/oder mit Akzeptanz-Masken aufweist, wobei die Kennung (8) einer eingehenden Nachricht (7) zumindest mit ausgewählten Akzeptanz-Kennungen und/oder mit ausgewählten Akzeptanz-Masken aus der weiteren Liste verglichen wird und abgefragt wird, ob die Kennung (8) der eingehenden Nachricht (7) gleich einer ausgewählten Akzeptanz-Kennung ist oder von der Akzeptanz-Maske umfasst ist, und dass die eingehende Nachricht (7) an die Applikation (5) weitergeleitet oder zurückgewiesen wird, falls die Kennung (8) der eingehenden Nachricht (7) gleich der ausgewählten Akzeptanz-Kennung ist oder von der Akzeptanz-Maske umfasst ist.

10. Filteranordnung (6) nach Anspruch 9, **dadurch gekennzeichnet, dass** die ersten Kennungen (ID1) und die zweiten Kennungen (ID2) der in der mindestens einen Liste abgelegten Kennungspaare (ID1, ID2) als Akzeptanz-Kennungen und/oder Akzeptanz-Masken der mindestens einen weiteren Liste herangezogen werden und dass eine eingehende Nachricht (7) an die Applikation (5) weitergeleitet oder zurückgewiesen wird, falls die Kennung (8) der eingehenden Nachricht (7) gleich der ersten Kennung (ID1) eines ausgewählten Kennungspaares (ID1, ID2) ist oder von der zweiten Kennung (ID2) des ausgewählten Kennungspaares (ID1, ID2) umfasst ist.

## Claims

1. Method for filtering messages (7), incoming via a serial data bus (2) of a communication network (1) in a communication module (4) of a subscriber (3) connected to the data bus (2), by means of a filter arrangement (6),
wherein the messages (7) have a respective identifier (8) for identification and the properties of the filter arrangement (6) are defined by identifiers of messages (7), which identifiers are stored in at least one list of the filter arrangement (6), wherein the at least one list of the filter arrangement (6) stores multiple identifier pairs (ID1, ID2) that define a respective range delimited by a first identifier (ID1) and a second identifier (ID2),
wherein the identifier (8) of an incoming message (7) is compared at least with selected identifier pairs (ID1, ID2) and a test is performed to determine whether the identifier (8) of the incoming message (7) is greater than or greater than or equal to the selected first identifier (ID1) and less than or less than or equal to the selected second identifier (ID2),
**characterized in that** the list of the filter arrangement (6) stores, in addition to each identifier pair (ID1, ID2), an associated filter mode information item (SFM; EFM),
wherein an incoming message (7), on the basis of the filter mode information item (SFM; EFM) of the identifier pair (ID1, ID2) for the current test, is forwarded to an application (5) running on the subscriber (3) or rejected if the identifier (8) of the incoming message (7) lies in the range delimited by the first identifier (ID1) and the second identifier (ID2) for the current test,
wherein the list of the filter arrangement (6) stores, in addition to each identifier pair (ID1, ID2), an associated forwarding information item (SFFS; EFFS), wherein an incoming message (7), on the basis of the forwarding information item (SFFS; EFFS) of the identifier pair (ID1, ID2) for the current test, is forwarded to a determined buffer store (FIFO0; FIFO1), in order to be fetched by the application (5), if the identifier (8) of the incoming message (7) lies in the range delimited by the first identifier (ID1) and the second identifier (ID2) for the current test.

2. Method according to Claim 1, **characterized in that** the filter arrangement (6) has, as a further filtering method, at least one further list with identifiers of messages, wherein the identifier (8) of an incoming message (7) is compared at least with selected identifiers from the further list and a test is performed to determine whether the identifier (8) of the incoming message (7) is equal to a selected identifier from the further list, and **in that** the incoming message (7) is forwarded to the application (5) or rejected if the identifier (8) of the incoming message (7) is equal to the selected identifier from the further list.

3. Method according to Claim 2, **characterized in that** the first identifier (ID1) and second identifier (ID2) of the identifier pairs (ID1, ID2) stored in the at least one list are used as identifiers of the at least one further list and **in that** an incoming message (7) is forwarded to the application (5) or rejected if the identifier (8) of the incoming message (7) is equal to the first identifier (ID1) or equal to the second identifier (ID2) of a selected identifier pair (ID1, ID2).

4. Method according to Claim 1, **characterized in that** the filter arrangement (6) has, as a further filtering method, at least one further list with acceptance identifiers and/or with acceptance masks, wherein the identifier (8) of an incoming message (7) is compared at least with selected acceptance identifiers and/or with selected acceptance masks from the further list and a test is performed to determine whether the identifier (8) of the incoming message (7) is equal to a selected acceptance identifier or is comprised by the acceptance mask, and **in that** the incoming message (7) is forwarded to the application (5) or rejected if the identifier (8) of the incoming message (7) is equal to the selected acceptance identifier or is comprised by the acceptance mask.

5. Method according to Claim 4, **characterized in that** the first identifiers (ID1) and the second identifiers (ID2) of the identifier pairs (ID1, ID2) stored in the at least one list are used as acceptance identifiers and/or acceptance masks of the at least one further list and **in that** an incoming message (7) is forwarded to the application (5) or rejected if the identifier (8) of the incoming message (7) is equal to the first identifier (ID1) of a selected identifier pair (ID1, ID2) or is comprised by the second identifier (ID2) of the selected identifier pair (ID1, ID2).

6. Filter arrangement (6) for a communication module (4) of a subscriber (3) connected to a serial data bus (2) of a communication network (1), for filtering messages (7) incoming via the data bus (2), wherein the messages (7) have a respective identifier (8) for identification and the filter arrangement (6) comprises at least one memory element (10) for storing a list with identifiers of messages that define the properties of the filter arrangement (6),
wherein the at least one list of the filter arrangement (6) stores multiple identifier pairs (ID1, ID2) that define a respective range delimited by a first identifier (ID1) and a second identifier (ID2),
wherein the filter arrangement (6) has test means that compare the identifier (8) of an incoming message (7) at least with selected identifier pairs (ID1, ID2) in order to establish whether the identifier (8) of the incoming message (7) is greater than or greater than or equal to the selected first identifier (ID1) and less than or less than or equal to the selected second identifier (ID2),
**characterized in that** the list of the filter arrangement (6) stores, in addition to each identifier pair (ID1, ID2), an associated filter mode information item (SFM; EFM),
wherein an incoming message (7), on the basis of the filter mode information item (SFM; EFM) of the identifier pair (ID1, ID2) for the current test, is forwarded to an application (5) running on the subscriber (3) or rejected if the identifier (8) of the incoming message (7) lies in the range delimited by the first identifier (ID1) and the second identifier (ID2) for the current test,
wherein the list of the filter arrangement (6) stores, in addition to each identifier pair (ID1, ID2), an associated forwarding information item (SFFS; EFFS), wherein an incoming message (7), on the basis of the forwarding information item (SFFS; EFFS) of the identifier pair (ID1, ID2) for the current test, is forwarded to a determined buffer store (FIFO0; FIFO1), in order to be fetched by the application (5), if the identifier (8) of the incoming message (7) lies in the range delimited by the first identifier (ID1) and the second identifier (ID2) for the current test.

7. Filter arrangement (6) according to Claim 6, **characterized in that** the filter arrangement (6) has at least one further list with identifiers of messages, wherein the identifier (8) of an incoming message (7) is compared at least with selected identifiers from the further list and a test is performed to determine whether the identifier (8) of the incoming message (7) is equal to a selected identifier from the further list, and **in that** the incoming message (7) is forwarded to the application (5) or rejected if the identifier (8) of the incoming message (7) is equal to the selected identifier from the further list.

8. Filter arrangement (6) according to Claim 7, **characterized in that** the first identifiers (ID1) and second identifiers (ID2) of the identifier pairs (ID1, ID2) stored in the at least one list are used as identifiers of the at least one further list and **in that** an incoming message (7) is forwarded to the application (5) or rejected if the identifier (8) of the incoming message (7) is equal to the first identifier (ID1) or equal to the second identifier (ID2) of a selected identifier pair (ID1, ID2).

9. Filter arrangement (6) according to Claim 6, **characterized in that** the filter arrangement (6) has at least one further list with acceptance identifiers and/or with acceptance masks, wherein the identifier (8) of an incoming message (7) is compared at least with selected acceptance identifiers and/or with selected acceptance masks from the further list and a test is performed to determine whether the identifier (8) of the incoming message (7) is equal to a selected acceptance identifier or is comprised by the acceptance mask, and **in that** the incoming message (7) is forwarded to the application (5) or rejected if the identifier (8) of the incoming message (7) is equal to the selected acceptance identifier or is comprised by the acceptance mask.

10. Filter arrangement (6) according to Claim 9, **characterized in that** the first identifiers (ID1) and the second identifiers (ID2) of the identifier pairs (ID1, ID2) stored in the at least one list are used as acceptance identifiers and/or acceptance masks of the at least one further list and **in that** an incoming message (7) is forwarded to the application (5) or rejected if the identifier (8) of the incoming message (7) is equal to the first identifier (ID1) of a selected identifier pair (ID1, ID2) or is comprised by the second identifier (ID2) of the selected identifier pair (ID1, ID2).

## Revendications

1. Procédé de filtrage de messages (7) entrant dans un module de communication (4) d'un abonné (3) raccordé à un bus de données (2) série d'un réseau de communication (1) par le biais du bus de données (2) au moyen d'un arrangement de filtrage (6),
les messages (7) possédant respectivement un identifiant (8) servant à l'identification et les caractéristiques de l'arrangement de filtrage (6) étant définies par des identifiants de messages (7) stockés dans au moins une liste de l'arrangement de filtrage (6),
plusieurs paires d'identifiants (ID1, ID2) étant stockées dans l'au moins une liste de l'arrangement de filtrage (6), par le biais desquelles est respectivement définie une plage délimitée par un premier identifiant (ID1) et un deuxième identifiant (ID2),
l'identifiant (8) d'un message (7) entrant étant au moins comparé à des paires d'identifiants (ID1, ID2) sélectionnées et une interrogation étant effectuée afin de déterminer si l'identifiant (8) du message (7) entrant est supérieur, ou égal ou supérieur, au premier identifiant (ID1) sélectionné et inférieur, ou inférieur ou égal, au deuxième identifiant (ID2) sélectionné,
**caractérisé en ce qu'**une information de mode de filtrage (SFM ; EFM) associée est stockée dans la liste de l'arrangement de filtrage (6) en plus de chaque paire d'identifiants (ID1, ID2),
un message (7) entrant, suivant l'information de mode de filtrage (SFM ; EFM) de la paire d'identifiants (ID1, ID2) de l'interrogation actuelle, étant transféré vers une application (5) en cours d'exécution sur l'abonné (3), ou refusé dans le cas où l'identifiant (8) du message (7) entrant se trouve dans la plage délimitée par le premier identifiant (ID1) et le deuxième identifiant (ID2) de l'interrogation actuelle, une information de transfert (SSFS ; EFFS) associée étant stockée dans la liste de l'arrangement de filtrage (6) en plus de chaque paire d'identifiants (ID1, ID2), un message (7) entrant étant transféré à une mémoire intermédiaire (FIFO0 ; FIFO1) donnée en fonction de l'information de transfert (SSFS ; EFFS) de la paire d'identifiants (ID1, ID2) de l'interrogation actuelle en vue d'être récupéré par l'application (5) dans le cas où l'identifiant (8) du message (7) entrant se trouve dans la plage délimitée par le premier identifiant (ID1) et le deuxième identifiant (ID2) de l'interrogation actuelle.

2. Procédé selon la revendication 1, **caractérisé en ce que** l'arrangement de filtrage (6) possède comme procédé de filtrage supplémentaire au moins une liste supplémentaire avec des identifiants de messages, l'identifiant (8) d'un message (7) entrant étant comparé au moins avec des identifiants sélectionnés de la liste supplémentaire et une interrogation étant effectuée afin de déterminer si l'identifiant (8) du message (7) entrant est égal à un identifiant sélectionné de la liste supplémentaire, et **en ce que** le message (7) entrant est transféré vers l'application (5), ou refusé dans le cas où l'identifiant (8) du message (7) entrant est égal à l'identifiant sélectionné de la liste supplémentaire.

3. Procédé selon la revendication 2, **caractérisé en ce que** les premiers identifiants (ID1) et les deuxièmes identifiants (ID2) des paires d'identifiants (ID1, ID2) stockées dans l'au moins une liste sont utilisés comme identifiants de l'au moins une liste supplémentaire et **en ce qu'**un message (7) entrant est transféré à l'application (5) ou refusé dans le cas où l'identifiant (8) du message (7) entrant est égal au premier identifiant (ID1) ou égal au deuxième identifiant (ID2) d'une paire d'identifiants (ID1, ID2) sélectionnée.

4. Procédé selon la revendication 1, **caractérisé en ce que** l'arrangement de filtrage (6) possède comme procédé de filtrage supplémentaire au moins une liste supplémentaire avec des identifiants d'acceptabilité et/ou avec des masques d'acceptabilité, l'identifiant (8) d'un message (7) entrant étant comparé au moins avec des identifiants d'acceptabilité sélectionnés et/ou avec des masques d'acceptabilité sélectionnés de la liste supplémentaire et une interrogation étant effectuée afin de déterminer si l'identifiant (8) du message (7) entrant est égal à un identifiant d'acceptabilité sélectionné ou s'il est inclus dans le masque d'acceptabilité, et **en ce que** le message (7) entrant est transféré vers l'application (5), ou refusé dans le cas où l'identifiant (8) du message (7) entrant est égal à l'identifiant d'acceptabilité sélectionné ou inclus dans le masque d'acceptabilité.

5. Procédé selon la revendication 4, **caractérisé en ce que** les premiers identifiants (ID1) et les deuxièmes identifiants (ID2) des paires d'identifiants (ID1, ID2) stockées dans l'au moins une liste sont utilisés comme identifiants d'acceptabilité et/ou masques d'acceptabilité de l'au moins une liste supplémentaire et **en ce qu'**un message (7) entrant est transféré à l'application (5) ou refusé dans le cas où l'identifiant (8) du message (7) entrant est égal au premier identifiant (ID1) d'une paire d'identifiants (ID1, ID2) sélectionnée ou inclus dans le deuxième identifiant (ID2) de la paire d'identifiants (ID1, ID2) sélectionnée.

6. Arrangement de filtrage (6) pour un module de communication (4) d'un abonné (3) raccordé à un bus de données (2) série d'un réseau de communication (1), servant au filtrage de messages (7) entrant par le biais du bus de données (2),
les messages (7) possédant respectivement un identifiant (8) servant à l'identification et l'arrangement de filtrage (6) comprenant au moins un élément de mémorisation (10) destiné à enregistrer une liste avec des identifiants de messages, par lesquels sont définies les caractéristiques de l'arrangement de filtrage (6),
plusieurs paires d'identifiants (ID1, ID2) étant stockées dans l'au moins une liste de l'arrangement de filtrage (6), lesquelles définissent respectivement une plage délimitée par un premier identifiant (ID1) et un deuxième identifiant (ID2),
l'arrangement de filtrage (6) possédant des moyens d'interrogation qui comparent l'identifiant (8) d'un message (7) entrant au moins à des paires d'identifiants (ID1, ID2) sélectionnées afin de déterminer si l'identifiant (8) du message (7) entrant est supérieur, ou égal ou supérieur, au premier identifiant (ID1) sélectionné et inférieur, ou inférieur ou égal, au deuxième identifiant (ID2) sélectionné,
**caractérisé en ce qu'**une information de mode de filtrage (SFM ; EFM) associée est stockée dans la liste de l'arrangement de filtrage (6) en plus de chaque paire d'identifiants (ID1, ID2),
un message (7) entrant, suivant l'information de mode de filtrage (SFM ; EFM) de la paire d'identifiants (ID1, ID2) de l'interrogation actuelle, étant transféré vers une application (5) en cours d'exécution sur l'abonné (3), ou refusé dans le cas où l'identifiant (8) du message (7) entrant se trouve dans la plage délimitée par le premier identifiant (ID1) et le deuxième identifiant (ID2) de l'interrogation actuelle, une information de transfert (SSFS ; EFFS) associée étant stockée dans la liste de l'arrangement de filtrage (6) en plus de chaque paire d'identifiants (ID1, ID2), un message (7) entrant étant transféré à une mémoire intermédiaire (FIFO0 ; FIFO1) donnée en fonction de l'information de transfert (SSFS ; EFFS) de la paire d'identifiants (ID1, ID2) de l'interrogation actuelle en vue d'être récupéré par l'application (5) dans le cas où l'identifiant (8) du message (7) entrant se trouve dans la plage délimitée par le premier identifiant (ID1) et le deuxième identifiant (ID2) de l'interrogation actuelle.

7. Arrangement de filtrage (6) selon la revendication 6, **caractérisé en ce que** l'arrangement de filtrage (6) possède au moins une liste supplémentaire avec des identifiants de messages, l'identifiant (8) d'un message (7) entrant étant comparé au moins avec des identifiants sélectionnés de la liste supplémentaire et une interrogation étant effectuée afin de déterminer si l'identifiant (8) du message (7) entrant est égal à un identifiant sélectionné de la liste supplémentaire, et **en ce que** le message (7) entrant est transféré vers l'application (5), ou refusé dans le cas où l'identifiant (8) du message (7) entrant est égal à l'identifiant sélectionné de la liste supplémentaire.

8. Arrangement de filtrage (6) selon la revendication 7, **caractérisé en ce que** les premiers identifiants (ID1) et les deuxièmes identifiants (ID2) des paires d'identifiants (ID1, ID2) stockées dans l'au moins une liste sont utilisés comme identifiants de l'au moins une liste supplémentaire et **en ce qu'**un message (7) entrant est transféré à l'application (5), ou refusé dans le cas où l'identifiant (8) du message (7) entrant est égal au premier identifiant (ID1) ou égal au deuxième identifiant (ID2) d'une paire d'identifiants (ID1, ID2) sélectionnée.

9. Arrangement de filtrage (6) selon la revendication 6, **caractérisé en ce que** l'arrangement de filtrage (6) possède au moins une liste supplémentaire avec des identifiants d'acceptabilité et/ou avec des masques d'acceptabilité, l'identifiant (8) d'un message (7) entrant étant comparé au moins avec des identifiants d'acceptabilité sélectionnés et/ou avec des masques d'acceptabilité sélectionnés de la liste supplémentaire et une interrogation étant effectuée afin de déterminer si l'identifiant (8) du message (7) entrant est égal à un identifiant d'acceptabilité sélectionné ou s'il est inclus dans le masque d'acceptabilité, et **en ce que** le message (7) entrant est transféré vers l'application (5), ou refusé dans le cas où l'identifiant (8) du message (7) entrant est égal à l'identifiant d'acceptabilité sélectionné ou inclus dans le masque d'acceptabilité.

10. Arrangement de filtrage (6) selon la revendication 9, **caractérisé en ce que** les premiers identifiants (ID1) et les deuxièmes identifiants (ID2) des paires d'identifiants (ID1, ID2) stockées dans l'au moins une liste sont utilisés comme identifiants d'acceptabilité et/ou masques d'acceptabilité de l'au moins une liste supplémentaire et **en ce qu'**un message (7) entrant est transféré à l'application (5), ou refusé dans le cas où l'identifiant (8) du message (7) entrant est égal au premier identifiant (ID1) d'une paire d'identifiants (ID1, ID2) sélectionnée ou inclus dans le deuxième identifiant (ID2) de la paire d'identifiants (ID1, ID2) sélectionnée.
